# EUROPEAN PATENT APPLICATION

(11) **EP 1 803 603 A2**
(43) Date of publication of application: **04.07.2007**
(21) Application number: 06398019.7
(22) Date of filing: 07.12.2006
(51) Int. Cl.: B60L 8/00, B60L 11/18

(54) **Automobile vehicle driven by electrical power**

(71) Applicant: De Jesus, Joao Francisco, 2500-434 Coto, Caldas da Rainha (PT)
(72) Inventor: De Jesus, Joao Francisco, 2500-434 Coto, Caldas da Rainha (PT)
(74) Representative: Pereira da Cruz, Joao

(57) **Abstract**

The present invention concerns an automobile vehicle driven by electrical power which uses turbines, solar panels 1, electric generators 13 and electric engines fed by batteries 14. It is essentially characterised in that it comprises:
- A system to collect Aeolian energy 2;
- Mechanical means 11 and 12 to operate electric generators 13, which, on its turn, feed batteries 14; and
- A system to collect solar energy 1.
- An electrical system composed by direct-current generators and batteries to feed the electric engine.

## Description

### Scope of the invention

The present invention concerns an automobile vehicle driven by electrical power, which does simultaneously use turbines, solar panels, electric generators and electric engines fed by batteries. More specifically, it concerns an automobile vehicle exclusively operated by the electrical power obtained through wind turbines placed in the front part of the vehicle and by a photovoltaic solar panel placed on the vehicle's top.

### Prior art

Several documents related with vehicles driven by electrical power are known and, among these documents, vehicles wherein the power is obtained by means of wind turbines. Among these documents we refer patents CA 2296794, JP 2000013906 and DE 19957431.

Document CA 2296794 concerns an electric vehicle having a body, driving wheels, an internal combustion engine and an electric engine. The vehicle has a controller coupled to the electric engine and to the internal combustion engine suitable to control, in a selective way, the performance thereof and a storing battery that is suitable to supply electrical power. The vehicle includes a mechanism to convert Aeolian energy, which is coupled to the storing battery to convert an air flow created by the vehicle's motion into electrical power so that the storing battery is recharged. The mechanism to convert Aeolian energy may be formed by at least an Aeolian turbine coupled to an electric generator. The Aeolian turbine may be fitted on the body so that the turbine is exposed to the air flow. This is a mixed solution of combustion engine/electric engine which, from the start, makes it distinct from the object of the present invention. Furthermore, the wind turbines are preferably placed on the top of the automobile vehicle which, once again, is distinct from the present invention.

Document JP 2000013906 refers to energy generator apparatus with a proper Aeolian turbine to charge the batteries of an automobile vehicle. It comprises one or two turbines and generator devices adjusted to the vehicle's dimensions which are installed and fixed side to side. Each device is placed inside a casing. As it may be verified by the document, the wind turbines used therein are distinct from those of the present invention.

Finally, patent DE 19957431 concerns a driving device for electri vehicles which is provided with its own high power generator to charge a battery. The battery supplies the electric current to drive one or more electric engines. One or more Aeolian turbines are provided to drive the generator and which are driven by the wind generated while driving. If the battery is charged, the electric current is used to operate the electric engines. In this case, unlike what happens with the present invention, the energy generated in the turbines may be directly used in the electric engines, which seems to be somehow absurd considering the power variations obtained as time goes by.

Although the documents of the most relevant prior art refer to the obtaining of electrical power by means of generators driven through the action of wind turbines, they all have significant differences in respect of the present invention. Indeed, none of them uses an auxiliary solar panel that ensures the power for all the vehicle's electrical systems and, simultaneously, ensures, upon the start, that the turbines work. Besides, the present invention employs turbines formed by helical vans which edges are fixed to circular rings, of the kind Francis turbine.

### Brief description of the drawings

The following description is based on the attached drawings, wherein:
- Figure 1 represents a view of the vehicle equipped with the Aeolian and solar system;
- Figure 2 represents a front view of the wind turbines fitted in the front part of the automobile vehicle;
- Figure 3 represents a rear and upper view of the front part of the automobile vehicle; and
- Figure 4 represents a view of an alternative wind turbine.

### Detailed description of the invention

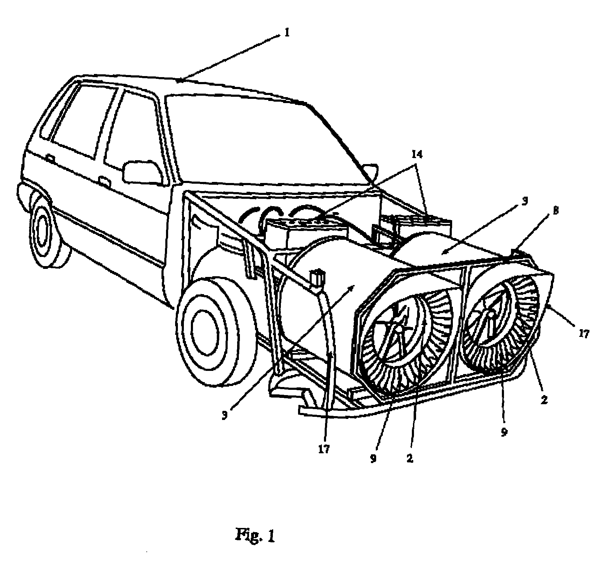

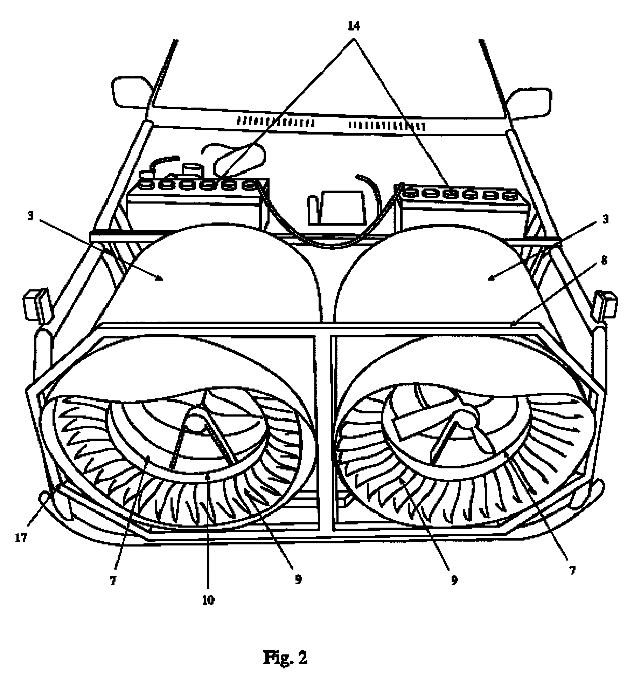

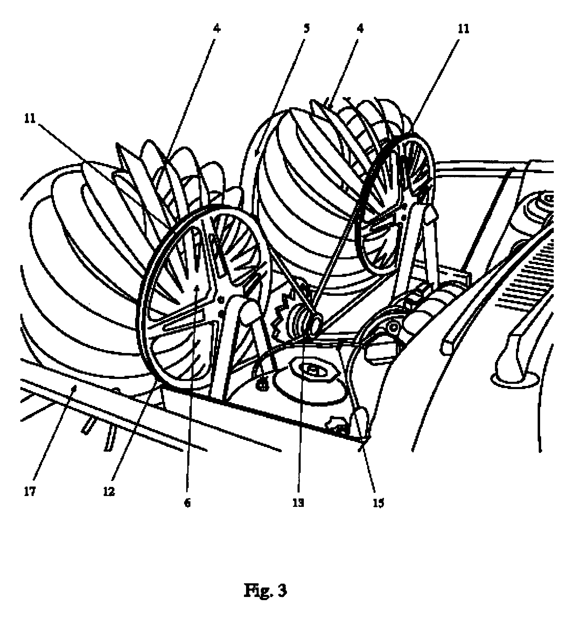

As it may be seen in figures 1, 2 and 3, on which a preferred embodiment is depicted, the automobile vehicle comprises, in addition to the standard components and organs, a solar panel 1 placed on the top of the vehicle and two turbines 2 enveloped by a casing 3. The said turbines 2 are formed by helical vans 4 which edges are fixed to circular rings 5 and 6 and are placed inside the casing 3 which presents the tops and the lower portion open. The said casing 3 presents in its front part a grid 7 duly articulated to the structure 8 of the body 17 of the automobile vehicle. Such grid is formed by fixed radial vanes 9 fitted between the inner surface of the casing 3 and one concentric ring 10. The front top of the casing 3 presents a configuration that is proper to lead the air into the turbines 2.

Coupled to the shafts of the turbines 2, in the rear edges, are fitted two pulleys 11 having belts 12 fitted thereon, which, on their turn, drive generator 13, which, on its turn, feeds batteries 14.

Between the electrical engine (not depicted) and batteries 14 is placed an electrical mechanical speed control 15 which shall allow the use of electrical power at variable engine speeds.

As it may be seen, turbines 2 are fitted on a triangular structure 16 which, on its turn, is supported by the body 17. On the front edges of the said turbine shafts are fitted propellers, which thereby transform part of the Aeolian energy into mechanical energy. The rear edge of each shaft of the turbine 2 is provided with a roller bearing and pulley 11 which drives belt 12 of generator 13.

As it may be gathered from the above, the generator transforms mechanical energy into direct-current electrical power, such power being transferred to batteries 14. The electrical engine that drives the automobile vehicle does only work with the direct-current supplied by batteries 14.

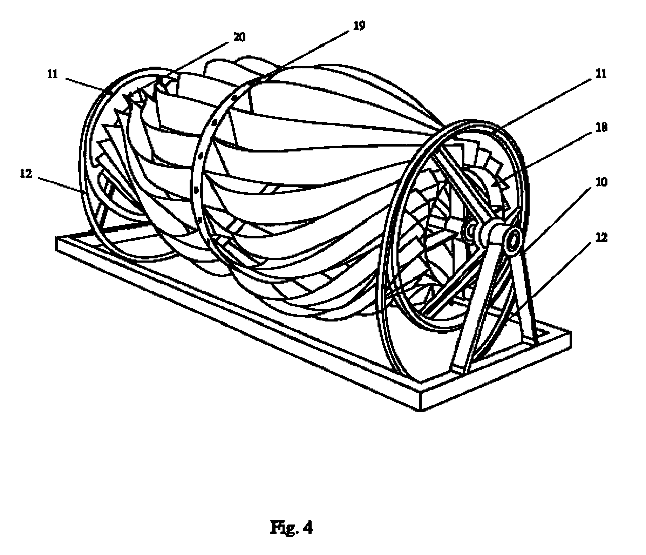

As it may be observed in Figure 4, concerning another embodiment, the two turbines may be substituted by just one turbine, the shaft of which is perpendicular to the longitudinal shaft of the vehicle. In this specific case, the turbine is provided with a structure of three rings 18, 19 and 20, two in the shaft's edge and one in the centre, to which the helical vans 4 are fixed, each edge of the shaft being connected to pulleys 11 which drive the belts of two electric generators. Obviously, this embodiment shall also have a casing which, however, is not depicted herein.

Other changes are yet possible. Among these, the fact that there may be only one turbine of suitable dimensions should be stressed.

The solar panel 1 placed on the top of the automobile vehicle is a photovoltaic panel and is intended to feed one battery (not depicted) irrespective of those that were previously referred to 14, which shall ensure the power to drive all the systems and electrical components of the vehicle and, by means of another electric engine (also not depicted), shall ensure the start of the turbines, irrespective of the speed the vehicle reaches.

In tests already performed it has been verified that as from the moment the automobile vehicle reaches a certain speed the feeding of the batteries is ensured. These, on their turn, supply the necessary power to drive the electric engine. Before such speed is reached, whereby the air flow is enough to drive the turbines, the said electric engine is driven by the electrical power stored in the batteries.

As it will be apparent for the experts in the art, the aforementioned may be altered in several manners. Among which the place for the batteries, which may be more conveniently located, the supporting structures of all the means involved and of the very body of the automobile vehicle, which may be modified in order to comprise these new components, should be mentioned.

## Claims

1. Automobile vehicle driven by electrical power which employs turbines, solar panels 1, electric generators 13 and electric engines fed by batteries 14, **characterised in that** it comprises:
- A system to collect Aeolian energy 2;
- Mechanical means 11 and 12 to drive electric generators 13, which, on its turn, feed batteries 14; and
- A system to collect solar energy 1.

2. Automobile vehicle according to the preceding claim, **characterised in that** the Aeolian system is composed by one or more turbines 2 which shaft is coupled to a pulley 11 which, on its turn, drives the electric generator 13 by means of suitable belts.

3. Automobile vehicle according to the preceding claims, **characterised in that** turbines 2 are wind turbines with helical vans 4 the edges of which are fixed to circular rings 5 and 6.

4. Automobile vehicle according to the preceding claims, **characterised in that** turbines 2 are placed in the front part of the vehicle, the shaft of which is either parallel or perpendicular to the longitudinal axis of the said vehicle.

5. Automobile vehicle according to the preceding claims, **characterised in that** the electric generator 13 charges directly the batteries 14 that feed the engine.

6. Automobile vehicle according to the preceding claims, **characterised in that** turbines 2, whenever placed with their shaft parallel to the longitudinal axis of the vehicle, are provided with a grid 7, which is provided with elements like fixed radial vanes 9 which guide the air flow into the body of turbine 2.

7. Automobile vehicle according to the preceding claims, **characterised in that** the turbines 2 are supported at their shaft edges by triangular structures 16 which, on their turn, are directly supported by the vehicle's body 17, the front edge of the said turbine shaft being provided with a propeller connected to the turbine shaft and the rear edge is provided with a roller bearing and a pulley which drives the generator belt.

8. Automobile vehicle according to the preceding claims, **characterised in that** the turbines are placed inside cylindrical casings 3 open in the edges and in their lower portion, the front part of the cylinder being coupled to the said grid 7.

9. Automobile vehicle according to the preceding claims, **characterised in that** the turbine, when it is placed having its shaft in a transversal position, is provided with a three ringed structure, two of which rings are in the edges of the shaft and one in the centre, onto which are fixed the blades, each edge of the shaft being connected to pulleys which drive the belts of two electric generators.

10. Automobile vehicle according to the preceding claims, **characterised in that** an electrical speed control is placed between the electric engine and the batteries which shall allow for the use of electrical power at variable engine speeds.

11. Automobile vehicle according to claim 1, **characterised in that** the solar panel placed on the top thereof is a photovoltaic panel.

12. Automobile vehicle according to claims 1 and 9, **characterised in that** the photovoltaic panel feeds a battery that is independent from those that were previously referred to, which shall ensure the power to drive all the electrical components of the vehicle and, through another electrical engine, shall ensure the turbines start, irrespective of the speed the vehicle reaches.
